# EUROPEAN PATENT APPLICATION

(11) **EP 3 417 747 A1**
(43) Date of publication of application: **26.12.2018**
(21) Application number: 18173520.0
(22) Date of filing: 22.05.2018
(51) Int. Cl.: A47J 37/04, A47J 37/06

(54) **DEVICE FOR TREATING FOOD PRODUCTS**

(30) Priority: 08.06.2017 IT 201700063174 U
(71) Applicant: Angelo Po Grandi Cucine - Societa' per Azioni, 41012 Carpi (MO) (IT)
(72) Inventor: CRISTIANI, Corrado, 41124 Modena (IT)
(74) Representative: Crugnola, Pietro

(57) **Abstract**

A device (1) for treating the surface of food products, comprises a tool (10) comprising a body (2), provided with a grip (3), to which an electric resistance (4) is fixed, which is intended to be applied to the surface of a food product and a supply element (9) connected electrically to the electric resistance (4) by a power cable (5) that engages the body (2) in a position placed near the centre of gravity of the tool (10).

## Description

The present invention relates to a device for treating food products, in particular a device for giving the surface of foods cooked with other processes, such as cooking in a pan, steaming or cooking in an oven, the appearance and taste that are typical of cooking on a grill or cooking on a hot plate.

It is known that cooking on a grill or a hot plate is a very common cooking method and is also very popular with the customers of restaurants and cafés.

Nevertheless, cooking on a grill or hot plate has various drawbacks such as, for example, carbonization of the zones of food in direct contact with the grill elements or the surface of the hot plate, which in addition to detracting from the organoleptic properties of the food, generates toxic substances that are harmful to health if they are ingested. In addition to that, cooking on the grill or hot plate is not uniform but is more accentuated in the zones in direct contact with the grill elements or with the surface of the hot plate.

Further, cooking on a grill or hot plate requires the presence for the whole cooking time of an operator to evaluate and check the progress of the cooking and to turn and/or reposition the food product at the right moment in the cooking process so as to obtain surface grilling on at least two surfaces of the food product. Even a small error in evaluating the temperatures and/or times at which the food is positioned and cooked on the grill or on the hot plate may run the risk of ruining the product because of excessive or irregular cooking with respect to the desired result for that type of food product.

On the other hand, other types of cooking, for example cooking in a pan or oven, entail fewer risks of overcooking the food product or of producing excessive carbonization of the surfaces thereof.

Further, cooking in a pan or steaming require less attention and a less constant presence of the operator in the kitchen and cooking in an oven even enables time and manpower to be reduced inasmuch as it is possible to cook without supervision and also using programmes preset by the operator, with the further advantage of making the desired gastronomic result always the same, constant, uniform and repeatable.

The different foods have different consistency and different types of chemical and physical transformations when they are subjected to contact with very hot outer surfaces. For example, cheeses and vegetables have to be grilled at different temperatures from meat, the grilling of which in turn depends on the type, thickness and dimensions of the meat. In order to produce the desired grilling effect on the outer surfaces of the food, it is thus necessary to have at one's disposal a device that is adaptable to different types of food with regard to the operating power thereof and/or adjusting of the actual temperature thereof.

A device of this type is known from utility model No. 274927 in the name of the same applicant.

The aforesaid utility model discloses a device for treating food products that comprises an electric resistance fixed to a grip and supplied by an electric cable that is inserted into the rear part of the grip.

Such a device, although it enables a grilling effect to be obtained simply on a food product, is difficult to use, in particular for prolonged periods of time, because the weight of the device, which can also be over 500 grams, weighs down, during use, on the wrist of the person who uses the device and can rapidly cause wrist fatigue, with consequent difficulty in using the device. Further, the device must be left switched on between one use and the next to prevent the resistance cooling excessively and the need to wait for the resistance to heat again to a desired operating temperature before being able to use the device again. This involves a significant waste of energy, which increases the cost of using the device.

The present invention proposes providing a device for treating food products that enables cooking on a grill or a hot plate to be simulated in foods cooked with other cooking processes, which can be used without causing excessive fatigue to the person using the device and which minimizes the consumption of energy necessary for the operation thereof.

The object of the present invention is achieved with a device according to claim 1.

Owing to the invention, it is possible to make a device for treating food products that is easy to use and reduces as much as possible fatigue in a person using the device and the consumption of energy required for the operation of the device.

The device must enable streaks to be made on the surface of food products to imitate the streaks produced by grilling or cooking on a hot plate without carbonization of the food in the zones of the streaks, or at least enables said carbonization to be minimal, without altering the organoleptic quality of the food and the uniformity of the cooking thereof.

The invention will now be disclosed below merely by way of non-limiting example with reference to the attached drawings, in which:
Figure 1 is a perspective view of a detail of the device for treating food products according to the invention;
Figure 2 is the longitudinal section of the detail of Figure 1;
Figure 3 is a perspective view of the device according to the invention.

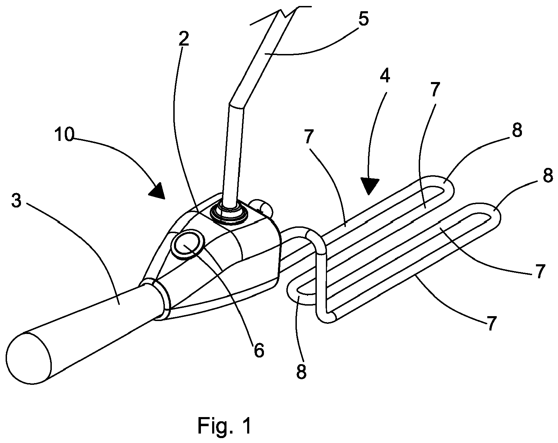

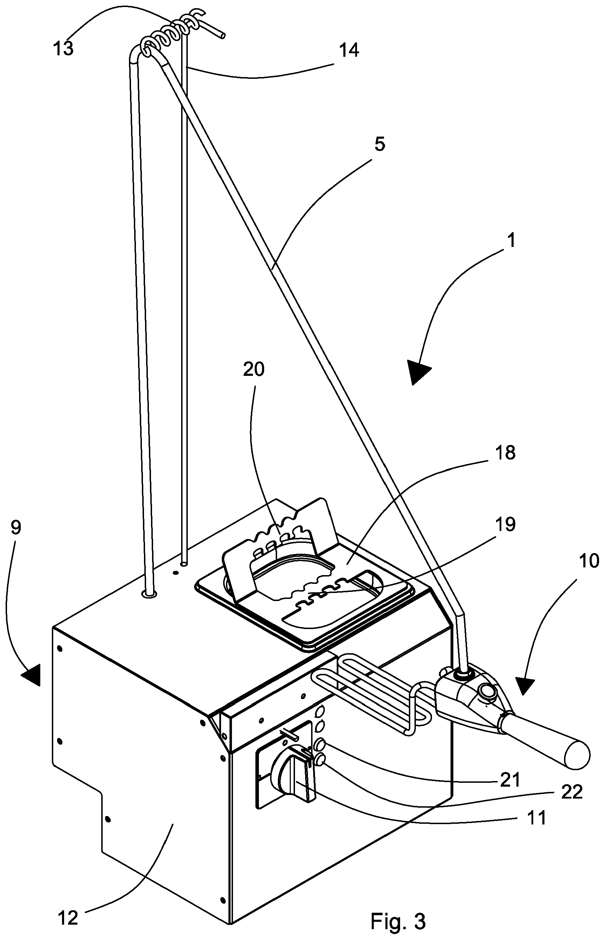

The device 1 (Figure 3) for treating food products according to the invention comprises a tool 10 (Figure 1) configured for making on the surface of a food product streaks of a dark colour that imitate a grilling effect, which is obtainable from cooking on a grill, in a food product cooked, for example, in the oven or in a pan.

The tool 10 comprises an electric resistance 4, which is preferably shaped as a grill. For example, as illustrated in Figure 1, the electric resistance 4 can consist of a series of rectilinear resistance portions 7, connected together by curvilinear resistance portions 8. Each of said resistance portions can be easily formed of several parts, including an inner part consisting of a heating filament, an intermediate part consisting of a suitable electric insulator such as for example a mineral oxide, and a more external part consisting of an outer metal cladding with the function of protecting and containing the electric insulator. In this manner, the food comes into contact only with the outer cladding of the resistance, which can easily be made of stainless steel or another metal material that is suitable for contact with the food products. The tool 10 is provided with a grip 3 that enables an operator to handle the tool 10 easily. One end of the grip 3 engages a body 2 made of insulating material to which the electric resistance 4 is fixed.

The electric resistance 4 is supplied, by means of a power cable 5, by a supply element 9, which can be connected to an electric supply grid and which is intended to supply the electric resistance 4 with a reduced voltage that is not hazardous to an operator who has to handle the electric resistance 4, even in the event of a fault in the insulation of the main electric insulation.

The supply element 9 comprises at least one adjusting element of the power supplied to the electric resistance 4, which may comprise a selector device 11 fitted to a body 12 of the supply element 9, said selector device 11 being able to be configured for varying the supply voltage of the resistance 4. The selector device 11 can be configured for varying in steps or continuously the supply power of the resistance 4 and can also act as a switch, for switching the device 1 on or off.

The power cable 5, which exits the body 12 of the supply element 9, engages the body 2 of the tool 10, in a position placed near the centre of gravity of the tool 10, and is connected, for example by an elastic element 13, to a support element 14 that is fixed to the body 12 of the supply element 9.

The tool 10 is supported by the power cable 5 in a balanced condition, owing to the fact that the power cable engages the body 2 in a position placed near the centre of gravity of the tool 10. Further, a part of the weight of the tool 10 is absorbed by the support element 14 through the elastic element 13 that connects the power cable 5 to the support element 14. This makes the use of the tool 10 easier and much less tiring for an operator because it causes a significant reduction in the stress caused to the wrist of an operator during use of the tool 10.

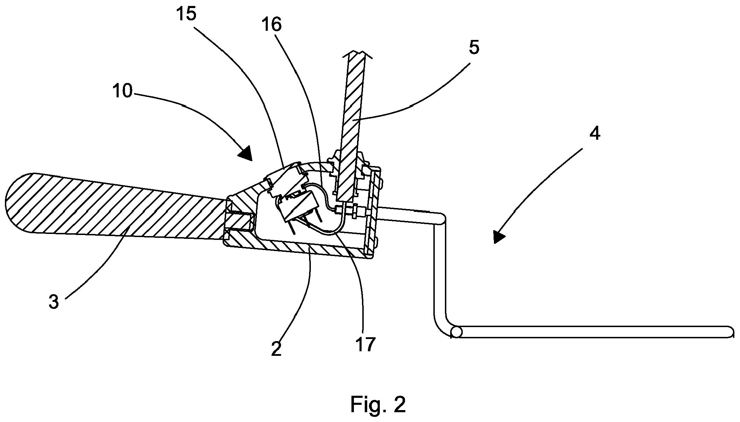

As can be seen from the section of the Figure 2, the power cable 5 is connected, by at least one first electrical connection 16 to a control element 15, for example button-shaped, which can in turn be connected, by a second electrical connection 17, to the resistance 4. The control element 15 is connected operationally to the supply element 9 by the power cable 5.

In order to minimize the energy consumption of the resistance 4, the power with which the resistance 4 is supplied is reduced automatically by the supply element 9 to a minimum value, for example comprised between 100W and 200 W, to place the device 1 in a stand-by condition when it is not used, or in the interval of time that elapses between two successive uses of the tool 10. The control element 15 is used to control, by the supply element 9, the transition from the stand-by condition, in which the resistance 4 is supplied with reduced power, to the operating condition, in which the resistance 4 is supplied at full power. The supply element 9 is further configured in such a manner that the transition from the full power supply condition of the resistance 4 to the stand-by condition occurs automatically after a set time, for example of a few dozen seconds, sufficient for an operator to be able to apply the tool 10 to a food product.

During stand-by periods, the resistance 4 cools only to a limited extent because it continues to be supplied, albeit at reduced power, and can thus rapidly return to an operating temperature, when the full power supply is restored by the operator acting on the control element 15.

This enables the energy consumption of the device 1 according to the present invention to be reduced significantly, without limiting the operation of the device.

It should be noted that when the device 1 is switched on after a period of inactivity during which it remains switched off, the transition from the stand-by condition to an operating condition can occur when the resistance 4 has reached a preset minimum temperature, depending on the full power selected with the selector device 11.

The supply element 9 can be provided with a container 18 in which the tool 10 can be replaced when it is not used.

The container 18 can also be separate from the supply element 9.

The container 18 can be provided with at least one cleaning element 19, 20, by means of which it is possible to remove from the resistance 4 residues of food product, condiments, or grease that have remained attached to the resistance 4 after contact with the surface of a food product. The container 18, with the at least one cleaning element 19, 20, is the object of another utility model patent application by the same applicant, which has been filed on the same date.

The electric resistance 2 can be economically provided with a thermostat for adjusting the temperature thereof.

The device 1 for treating food products according to the invention is used as follows: after switching on the device 1 by the selector device 11 and after the electric resistance 4 has reached the optimum operating temperature, depending on the type of food product to be treated, the electric resistance 4 is rested for a few seconds on the surface of the food to be treated. The reaching of said optimum temperature can be indicated by switching on a warning light 21 placed on the body 12 of the supply element 9, for example near the selector device 11.

The high temperature of the electric resistance 4 creates, in the zones of the surface of the food with which the rectilinear resistance portions 7 come into contact, streaks of a dark colour that simulate those that are generated during cooking of a food on a grill or a plate. The short contact time of the electric resistance 4 with the surface of the food does not however permit carbonization to be reached of the zones of said surface that have come into contact with the electric resistance 4. The food thus takes on the appearance and the taste of a food cooked on a grill or hot plate but without the presence of carbon residues and without alteration of the organoleptic properties due to excessive exposure to heat. After the application of the resistance 4 to the surface of the food product has terminated, the operator can go on to apply the resistance 4 to the surface of another food product. If, in the meantime, the device has moved to the stand-by condition, the operator restores the full power supply by acting on the control element 15. The stand-by condition of the device 1 can be indicated by switching on a further warning light 22 placed on the body 12 of the supply element 9, for example near the selector device 11.

The process of treating the surface of the food product can be easily performed before or after performing the cooking process of the food product by other cooking methods according to the type of food product and the optimum type of cooking for that product.

The device 1 according to the invention can be made in portable shape, as is illustrated in the figures, or can be integrated into a food cooking apparatus or into a service surface of a kitchen.

## Claims

1. Device (1) for treating the surface of food products, comprising a tool (10) comprising a body (2), provided with a grip (3), to which an electric resistance (4) is fixed, intended to be applied to the surface of a food product, a supply element (9) connected electrically to the electric resistance (4) by a power cable (5), **characterized in that** said power cable (5) engages said body (2) in a position placed near the centre of gravity of the tool (10).

2. Device (1), according to claim 1, wherein on said body (2) a control element (15) is arranged connected to the power cable (5) by at least one first electrical connection (16) and is possibly connected to the resistance (4) by a second electrical connection (17), said control element (15) being connected operationally to the supply element (9).

3. Device (1) according to claim 2, wherein said supply element (9) is configured for supplying the electric resistance (4) at full power or at reduced power, to which a stand-by condition of the device (1) corresponds.

4. Device (1) according to claim 3, wherein said reduced power is a power comprised between about 100 W and about 200 W.

5. Device (1) according to claim 3, or 4, wherein said supply element (9) is configured for passing from the full power supply condition of the resistance (4) to the stand-by condition after a preset interval of time.

6. Device (1) according to claim 5, wherein, when the device (1) is switched on after a period of inactivity during which it remains switched off, the transition from the stand-by condition to an operating condition can occur when the resistance (4) has reached a minimum preset temperature, depending on the full power selected with the selector device (11).

7. Device (1) according to claim 5, or 6, wherein said preset interval of time is equal to a few dozen seconds.

8. Device (1) according to any one of claims 3 to 7, wherein said control element (15) is configured so as to control the transition of the device (1) from the stand-by condition to the full power supply condition of the resistance (4).

9. Device (1) according to any preceding claims, wherein said power cable (5) is connected by an elastic element (13) to a support element (14) that is fixed to the supply element (9).

10. Device (1) according to any preceding claims, wherein said supply element (9) is provided with warning light (21) which comes on to indicate that the resistance (4) has reached a preset temperature and/or is provided with a further warning light that comes on or off to indicate that the device (1) is in stand-by condition.

11. Device (1) according to any preceding claims, further comprising a container (18) in which the tool (10) must be placed when it is not used.

12. Device (1) according to claim 11, wherein said container (18) is provided with at least one cleaning element (19, 20), by means of which it is possible to remove from the resistance (4) residues of food product, condiments, or grease that have remained adhering thereto.

13. Device (1) according to any preceding claim, wherein said supply element (9) comprises an adjusting element (11) for adjusting the power supplied to the electric resistance (4).

14. Device (1) according to claim 13, wherein said adjusting element comprises a selector device (11) configured for varying the supply voltage of the resistance (4) continuously or by steps.

15. Device (1) according to claim 14, wherein said selector device (11) is configured for also acting as a switch to switch on or switch off the device (1).
